Europäisches Patentamt

European Patent Office

Office européen des brevets

(11) Publication number: **0 600 110 A1**

## EUROPEAN PATENT APPLICATION

(21) Application number: **92120393.1**

(22) Date of filing: **30.11.92**

(51) Int. Cl.5: **H02K 49/06**, H02K 7/11, H02K 19/10, H02K 29/00

(43) Date of publication of application:
**08.06.94 Bulletin 94/23**

(84) Designated Contracting States:
**AT BE CH DE DK ES FR GB GR IE IT LI LU MC NL PT SE**

(71) Applicant: **ELECTRIC MOTOR DEVELOPMENTS LTD.**
**Kempston Court,**
**Manor Road**
**Kempston Hardwick, Bedford MK4 39NT(GB)**

(72) Inventor: **Rouhi-Laridjani, Atoussa, c/o**
**Electric Motor Dev.**
**Kempston Court,**
**Manor Road**
**Kempston Hardwick, Bedford, MK43 9NT(GB)**

(74) Representative: **Monti, Umberto**
**Via Washington 48**
**I-20146 Milano (IT)**

(54) **Magnetic speed reducer.**

(57) A magnetic speed reducer and torque amplifier adapted to be mounted to the output shaft of a drive motor comprises two sets of metal disks (1, 2) stacked together and interleaved along the shaft (30) of a motor (10), and means (33) for generating an axial magnetic field through said alternated disks.

The disks (1, 2) are of a non magnetic base material and provided with a number of adjacent radially extending portions or lines (15, respectively 25) of a ferromagnetic material. The number of radial lines (25) of the stator (k-n) is different from the number (k) of the radial lines on the rotor disks (1), with the difference therebetween being equal to the number of poles of the generated magnetic field.

The magnetic gearbox can be incorporated in an axial airgap brushless motor (10), located between stator windings (33) and a free running rotor (34).

*Fig. 5*

EP 0 600 110 A1

The present invention relates to a magnetic speed reducer or gearbox device.

The device of the invention applies in joint and similar applications wherein a relatively high torque at low speed is required. More particularly the invention applies in joint actuation such as robot axis actuators in space applications, without such applications being intended as limiting the use of the invention.

According to the known art when a relatively high torque at low speed is requested the conventional approach was that of using a small, relatively high speed motor coupled to a high ratio mechanical gearbox, and a safety brake, a position/speed sensor on the high speed side and a position sensor on the low speed side.

The above known arrangement suffers from a number of drawbacks that will be illustrated hereinbelow.

The mechanical gearbox is complex, has a limited life and reliability and can bring about problems such as the risk of a mechanical backlash which limits the control bandwidth of the system.

The arrangement has a complex construction with a large number of components which involves a limited reliability and a high cost of the assembly. It further requires two shafts (input and output) which in turn causes a duplication of the sensors, namely the motor sensor to control the motor commutation and speed, and the sensor controlling the joint position. Another consequent drawback is the complex interconnection wiring due to the high number of cables.

Finally the known arrangement allows for a limited number of life cycles since some of the commonly used gearboxes (e.g. harmonic drive) have a limited life.

The object of the present invention is that of overcoming the above mentioned limits and more particularly to realize an electric machine which delivers low speed and high torque in a low mass assemby without gearing.

The above objects are achieved by a magnetic speed reducer adapted to be mounted to the output shaft of a drive motor, characterized in that it comprises:

a first set of rotor disks each being provided with a central hole, said disks being coaxially mounted on the shaft of said motor and axially spaced along said shaft;

a second set of stator disks each being provided with a central hole, said disks being coaxially fixed to the casing of said motor and interleaved with the disks of said first set,

each of said disks being of a non magnetic base material and provided with a number of adjacent radially extending portions or lines of a ferromagnetic material, the number of said radially extending portions in the stator disks being different from the number of radially extending portions in the rotor disks;

means for generating an axial magnetic field through said first and second sets of disks.

An electric actuator embodying the speed reducer of the present invention is capable of directly operating a robot arm with the low speed, high torque, good smoothness and intrinsic safety brake ability required by a typical space application.

According to a preferred embodiment of the invention, the magnetic speed reducer is built into the motor airgap of a brushless electric motor, while the motor part retains its individuality, and more particularly the magnetic disk that acts as a rotor does rotate at the high speed typical of the gearbox input.

The invention will be disclosed with greater details with particular reference to the attached drawings that are supplied as a non limiting example, and in which:

Fig.s 1 and 2 are plane views of a rotor disk and a stator disk respectively of the magnetic speed reducer according to the present invention;

Fig. 3 shows the coincidence areas on a disk stack;

Fig. 4 is an enlarged cross-section view along the lines IV-IV in Fig. 2;

Fig. 5 is a half cross-section view of a three phase electric motor incorporating the magnetic speed reducer of the invention; and

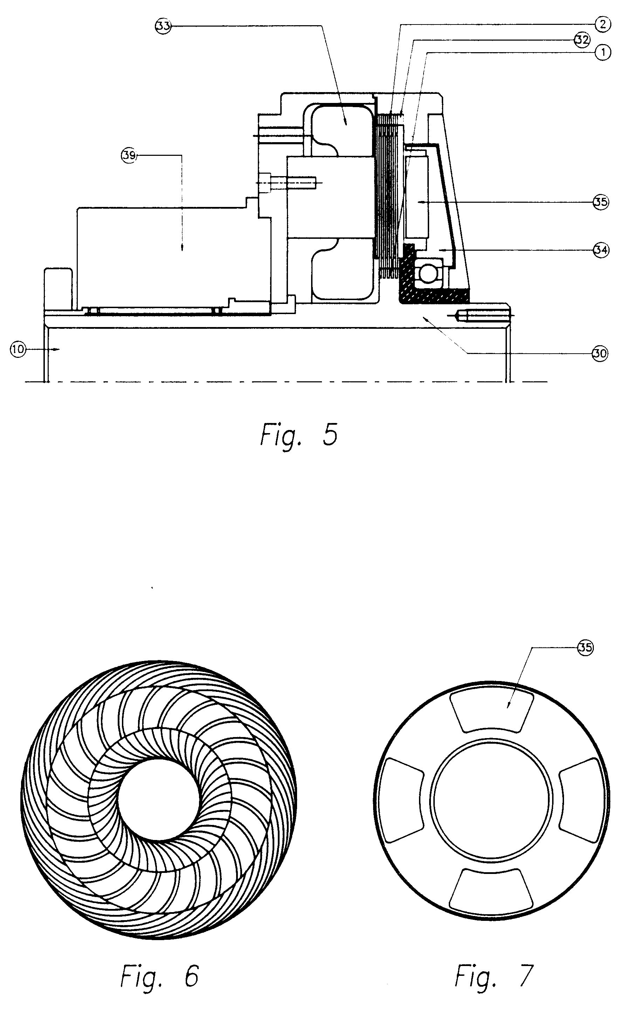

Fig.s 6 and 7 are front views that illustrate the brushless stator and the free running permanent magnet rotor of Fig. 5.

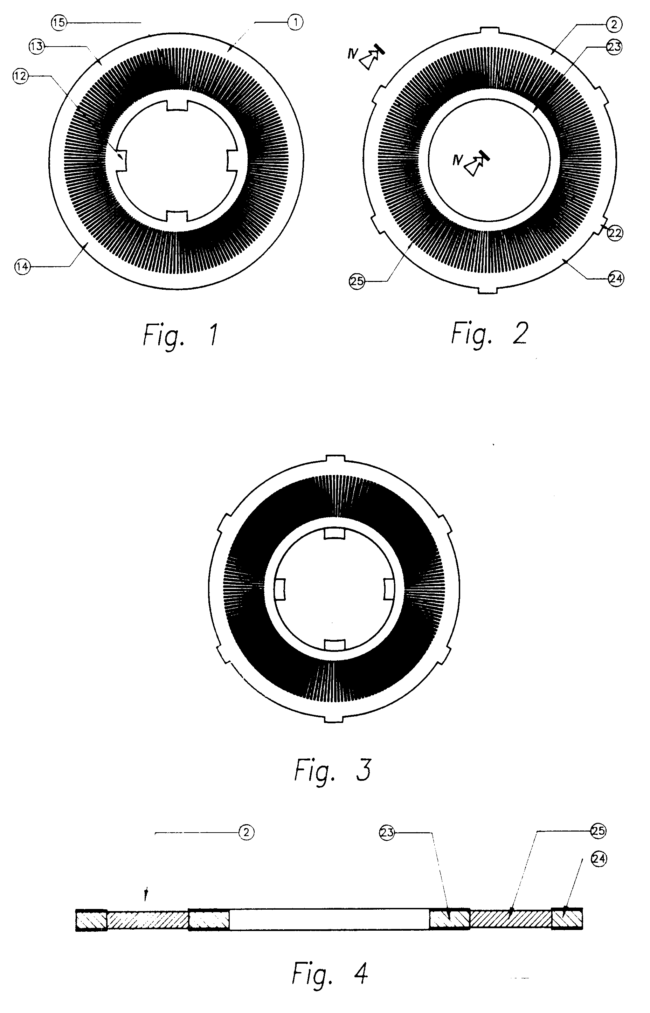

With reference to Figures 1 to 4, the joint design of the invention comprises two sets of disks, namely a rotor disk 1 and a stator disk 2, respectively. The rotor disk 1has a central hole and a number of projections 12 on the inner periphery thereof ,while the stator disk 2 has a number of projections 22 in the outer periphery thereof and a central hole. The diameter of the disks are sligthly different and in the illustrated embodiment the diameter of the rotor disk is smaller than that of the stator disk. Both disks are made of a non magnetic base material e.g. brass, and are formed with a number of radial portions or lines (15, 25) of a ferromagnetic material that is compatible with the base material, such as soft iron or a Ni-Co alloy.

As illustrated in the cross section view of Fig. 4, the portions 25 of ferromagnetic material are embedded within the stator disk 2 and have substantially the same thickness of the disk; they radially extend for a length shorter than the radial extension of the disk, thus forming an inner ring 23 and an outer ring 24 of the base material. The construction of the lines in the rotor disk 1 si similar and rings 13 and 14 are formed in the rotor disk 1.

A convenient process for manufacturing the disks is the technique known as electroforming in which the disks and the embedded lines are electrolytically grown, but of course other process can be used for their manufaturing.

The number of the radially extending lines (or portions) 15 in the rotor disk 1 is different from the number of radially extending lines 25 in the stator disk 2, and preferably there are more lines in the stator disk 2 than in the rotor disk 1.

According to the illustrated preferred embodiment there are formed about 200 lines in the stator disk 2 and a few lesser lines in the rotor disk, e.g. 196 and the line width is such as to account on the whole for about 35% of the peripheral angular extension of the disk. Fig. 3 illustrates the aspect of the two coaxially overlapped disks 1 and 2, e.g. when mounted on a common shaft.

The inner and outer annular flat portions forming the rings of non magnetic material 13, 14 and 23, 24 of both disks are covered with a layer of low friction material, such as a hard metal (not shown). As an alternative, the whole surfaces of the disks can be covered by such friction material. This way the magnetic lines on each disk are spaced by a predetermined non magnetic air gap when the disks are stacked together, i.e. coaxially mounted on a same axis at a predetermined axial distance.

The construction of the the magnetic speed reducer of the invention will be illustrated with reference to Fig. 5 in which the device is incorporated in a three-phase 4-pole electric motor 10 of the brushless type.

A number of rotor disks 1 are mounted on the output shaft 30 of the motor with a constant axial spacing, and an equal number of stator disks 2 are interleaved to the former, i.e. alternatively and coaxially mounted with respect to the rotor disks 1, and kept in place by being fixed to the motor shell (casing) 31, and by spacer rings 32.

The assembly of stacked disks is located in the airgap of an axial airgap brushless motor 10, i.e. between the stator windings 33 of the motor 10 and the permanent magnet rotor 34 of the motor 10. An axial magnetic field is applied to the stack of disks by the permanent magnet rotor. As an example Fig. 7 illustrates a four-pole permanent magnet disk. The same result can be obtained by using two symmetrical four-pole stators to create a magnetic field by means of the stator exciting current.

The operational principle of the magnetic gearing of the invention is explained in the following.

As shown in Fig. 3, the slight difference in the number of lines results in four areas, located along the disk circumference, in which the rotor and stator lines are aligned, with such lines being not aligned elsewhere.

In more general terms, the number n of alignement zones is equal to the difference between the number (n-k) of stator lines and the number k of rotor lines.

As a consequence of the above arrangement, there is a very high difference in magnetic reluctance between the coicidence areas and the non coincidence areas.

The axially oriented magnetic field (a four pole one in the illustrated embodiment) is created by the permanent magnets 35, with the pole amplitude being equal to the width of the magnets.

Due to the reluctance difference between the coincidence and non coincidence areas, the magnetic field "locks" the rotor disks fixed with respect to the stator disks.

When the fast wheel rotor 34 is rotated and drives the rotor disks, the magnetic field "drags" the coincidence areas rotating the rotor disks by one line for each complete movement of one pole to the next one.

The rotation of the magnetic field can be obtained by feeding a proper current to the windings of a three-phase, axial air gap stator 33 of the brushless motor.

A complete translation of one alignement zone to the next moves the rotor disk set by one line, so that if there are k lines on the stator and (k-n) lines on the rotor, a full rotation of the permanent magnet rotor will advance the rotor disks by n lines, so that the disk assembly acts as a reducer with a transmission ratio given by n/k.

The reduction ratio Rr can also be expressed as:

$$Rr = (Sn-Rn)/Rn$$

where Sn is the stator disk line number, and Rn is the rotor disk line number, with the pole number Pn of the permanent magnet is given by:

$$Pn = Sn - Rn.$$

The amount of torque which the speed reducer can develope before snapping free of the magnetic retention depends on the the slope of the curve representing the energy stored in the magnetic structure versus the rotation angle of the rotor. Since the entire energy in the airgap can be annihilated by rotating the rotor assembly by half line, it is clear that very high torque values can be reached with a sufficient number of lines and disks.

The device of the invention has a number of advantages over the known prior art devices.

The magnetic speed reducer has a strongly improved reliability with respect to the devices of the prior art as well an improved efficiency and an increased stiffness.

The dynamic performance of the magnetic speed reducer is improved and the device has a reduced mass and an improved accuracy

The intrinsic safety brake action is provided by the irreversibility of the speed reducer, which is inferred from the internal friction and the high reduction ratio.

Moreover the geometry of the proposed solution allows for a large through hole for cabling and sensor connections through the joint.

An accordance with another embodiment of the invention (not shown), said axial magnetic field can be generated by a set of two permanent magnet disks, acting as input shaft of the speed reducer and simmetrically positioned at the sides of the speed reducer. As a further alternative, such axial magnetic field can be generated by a set of two axial three-phase stators, operated either in parallel or in series to generate an axial rotating field.

Although the invention has been illustrated with reference to a particular preferred embodiment incorporated within a brushless electric motor, the device of the invention can be applied to other types of moteors, even non electric motors provided that means for generating the axial magnetic field are foreseen. Moreover an actuator incorporating the disclosed magnetic speed reducer can be used for a variety of other applications, such as pointing mechanisms, positioners, electric cams, actuators for micro-gravity devices, platters, latching/delatching mechanisms, gymbal systems and others.

## Claims

1. A magnetic speed reducer adapted to be mounted to the output shaft of a drive motor, characterized in that it comprises:

   a first set of rotor disks (1) each being provided with a central hole, said disks being coaxially mounted on the shaft (30) of said motor (10) and axially spaced along said shaft (30);

   a second set of stator disks (2) each being provided with a central hole, said disks being coaxially fixed to the casing of said motor (10) and interleaved with the disks (1) of said first set,

   each of said disks (1, 2) being of a non magnetic base material and provided with a number of adjacent radially extending portions or lines (15, respectively 25) of a ferromagnetic material, the number (n-k) of said radially extending portions in the stator disks being different from the number (k) of radially extending portions in the rotor disks;

   means (35) for generating an axial magnetic field through said first and second sets of disks.

2. A magnetic speed reducer as claimed in claim 1, characterized in that the inner and outer annular portions of said disks (13, 14; 23, 24) are covered by a layer of low friction material.

3. A magnetic speed reducer as claimed in claim 1 or 2, characterized in that the number of radially extending portions in the stator disks (n-k) is greater than the number of radially extending portions on the rotor disks (k).

4. A magnetic speed reducer as claimed in claims 1 to 3, characterized in that said difference is equal to the number of poles of said means for generating an axial magnetic field.

5. A magnetic speed reducer as claimed in claims 1 to 4, characterized in that said motor is an electric motor.

6. A magnetic speed reducer as claimed in claim 5, characterized in that said electric motor is a 4-pole three-phase axial airgap brushless motor (10).

7. A magnetic speed reducer as claimed in claim 6, characterized in that said assembly of stacked disks (1, 2) is located in the airgap of said motor (10), between the stator windings (33) and the free running rotor (34) of the motor (10), the stator windings (33) supplying the axial magnetic field.

8. A magnetic speed reducer as claimed in claim 4, characterized in that said axial magnetic field is generated by a set of two permanent magnet disks, acting as input shaft of the speed reducer and simmetrically positioned at the sides of the speed reducer.

9. A magnetic speed reducer as claimed in claim 4, characterized in that said axial magnetic field is generated by a set of two axial three-phase stators, operated either in parallel or in series to generate an axial rotating field.

10. A three-phase axial airgap brushless motor incorporating a magnetic speed reducer as claimed in any of claims 1 to 4.

Fig. 1

Fig. 2

Fig. 3

Fig. 4

Fig. 5

Fig. 6

Fig. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | PATENT ABSTRACTS OF JAPAN<br>vol. 10, no. 150 (E-408)(2207) 31 May 1986<br>& JP-A-61 009 162 ( AIWA ) 16 January 1986<br>* abstract * | 1,4 | H02K49/06<br>H02K7/11<br>H02K19/10<br>H02K29/00 |
| A | | 8 | |
| Y | US-A-3 375 383 (PHILBRICK)<br>* column 1, line 47 - column 3, line 49; figures * | 5,6,10 | |
| A | | 1-4,7 | |
| Y | REVUE DE PHYSIQUE APPLIQUEE<br>vol. 22, no. 5, May 1987, PARIS FR<br>pages 359 - 366<br>GOYET ET AL. 'Expérimentation d'un ensemble machine à réluctance variable-convertisseur à extinction forcée...'<br>* page 360, left column, paragraph 2; figure 1 * | 1,4-6,10 | |
| Y | US-A-3 301 091 (REESE)<br>* column 2, line 27 - line 34 *<br>* column 11, line 51 - column 13, line 32; figure 11 * | 1,3-5 | TECHNICAL FIELDS SEARCHED (Int. Cl.5 )<br><br>H02K |
| Y | US-A-1 665 613 (TANNER)<br>* page 2, line 90 - line 118; figure 4 * | 1,3-5 | |
| A | WO-A-9 012 966 (METOOL PRODUCTS)<br>* abstract * | 2 | |
| A | GB-A-1 167 805 (JARRET)<br>* page 2, line 35 - line 69; figures 1-3 * | 9 | |

The present search report has been drawn up for all claims

| Place of search | Date of completion of the search | Examiner |
|---|---|---|
| THE HAGUE | 15 JULY 1993 | ZANICHELLI F. |

EPO FORM 1503 03.82 (P0401)